# EUROPEAN PATENT APPLICATION

(11) **EP 3 522 513 A1**
(43) Date of publication of application: **07.08.2019**
(21) Application number: 18155104.5
(22) Date of filing: 05.02.2018
(51) Int. Cl.: H04N 1/034, B41J 3/28, B41J 11/00, H04N 1/23

(54) **METHOD OF PREPARING A PRINT JOB FOR A FLATBED PRINTER**

(71) Applicant: OCE Holding B.V., 5914 CA Venlo (NL)
(72) Inventor: ROOS, Mathieu, 5914 CA Venlo (NL); GRUAZ, Joris D., 5914 CA Venlo (NL)
(74) Representative: OCE IP Department

(57) **Abstract**

A method of preparing a print job for a flatbed printer (10), the method comprising the steps of:
- displaying, on the print surface (16), a preview image of image contents to be printed on the media sheets (20);
- placing a number of media sheets (20) on a print surface (16) of the flatbed printer (10);
and at least one of:
- editing the image contents; and
- repositioning one or more of the media sheets (20),
characterized in that the preview image is formed on the print surface (16) by controlling a raster of active display elements (28) that are provided on the print surface (16).

## Description

The invention relates to a method of preparing a print job for a flatbed printer, the method comprising the steps of:
- displaying, on the print surface, a preview image of image contents to be printed on the media sheets;
- placing a number of media sheets on a print surface of the flatbed printer; and at least one of:
   - editing the image contents; and
   - repositioning one or more of the media sheets.

When a flatbed printer, e.g. a scanning type flatbed ink jet printer, is used for printing images onto cut media sheets, it is frequently desired to have a preview showing how the images to be printed will fit into the footprints of the media sheets, so that the positional relation between the image contents to be printed and the media sheets placed on the print surface can be checked and corrected, if necessary.

US 9 656 492 B2 discloses a method of this type wherein the preview image is displayed on the print surface by means of a projector that is installed above the print surface and projects an image that corresponds to the print data as specified in the print job onto the print surface and/or on the media sheets that have been placed thereon. Thus, the print surface of the printer serves as a kind of projection screen on which the preview image is made visible. The projector may be combined with a camera that is capable of capturing an image of the print surface and the media sheets placed thereon. Then, suitable image processing software can be used for identifying the exact positions and outlines of the media sheets on the basis of the captured image, and if it is found that the media sheets are not placed in the correct positions relative to the projected image of the contents to be printed, the error may be corrected either by repositioning the media sheets or by electronically moving (e.g. shifting or rotating) the image contents to be printed on the individual media sheets until the image contents fit exactly into the areas of the media sheets. Then, the print head which scans the print surface will be controlled on the basis of the edited image contents, so that each image pixel is printed exactly in the position that is intended to have relative to the contour of the media sheet.

It is an object of the invention to provide a method by which the positional relationship between the media sheets on the print surface and the images scheduled for printing can be anticipated with improved accuracy.

In order to achieve this object, in the method according to the invention, the preview image is formed on the print surface by controlling a raster of active display elements that are provided on the print surface.

Thus, according to the invention, the print surface is not just used as a projection screen for displaying the preview image, but instead the print surface constitutes an active display screen on which the preview image is formed.

This has the advantage that the position and shape of the preview image on the print surface is not affected by a possible error in the adjustment of a projector relative to the print surface. It will be understood that, in particular when the print surface has large dimensions, the conventional projector had to be mounted at a considerable distance above the print surface, so that even minor errors in the angular position of the projector lead to a substantial displacement of the projected image. The invention permits to eliminate errors that would be caused by this effect. Moreover, the invention permits to avoid distortions of the preview image that could be caused by imaging errors such as aberration and the like of an optical projection system.

Further, the invention allows reducing the dimensions of the printing system, in particular in height, because a projector disposed in a high position above the print surface can be dispensed with. Likewise, the invention eliminates the need for a high-luminosity light source as is usually required in a projector.

More specific optional features of the invention are indicated in the dependent claims.

In addition to displaying the preview image of the image contents, the display elements on the print surface may also be used for showing position markers that mark the target positions of the media sheets to be placed on the print surface. For example, the image displayed on the print surface may comprise the outlines of the media sheets, so that an operator or user can easily see where and how he or she has to place the media sheets on the print surface. As an alternative or in addition, the displayed image may contain positioning marks adjacent to but outside of the target areas of the media sheets. These positioning marks remain visible even when the media sheets have been placed on the print surface and obscure the image contents that are reproduced inside the areas of the media sheets. In this way, it is possible to position the media sheets with very high accuracy.

On the other hand, if the image displayed on the print surface includes the contents to be printed and also the outlines of the media sheets, an optimal fit between the media sheets and the printed contents can be achieved not only by correcting the positions and orientations of the media sheets but also by editing the image contents. As long as the media sheets have not yet been placed on the print surface, the preview image shows whether or not, for example, the image contents to be printed on the individual media sheets are centered correctly on the media sheets and are aligned correctly relative to the edges of the media sheets. At this stage, a perfect match between the contents to be printed and the outlines of the media sheets can be achieved by editing the image contents, e.g. by scaling, shifting and rotating the images as required.

The invention also relates to a flatbed printer that is suitable for carrying out the method described above, i.e. a flatbed printer having a print surface that is configured as an active raster display device.

For example, the print surface may be constituted by a flat screen utilizing any known display technology such as LED displays, OLED displays, liquid crystal displays, plasma displays and the like, as they are used in TV sets, computer monitors or in screens of tablet computers and smartphones.

In an attractive embodiment, the print surface is configured as a touch-sensitive screen (touch screen), utilizing technologies that are known for example from tablets and smartphones.

The touch sensitivity of the print surface offers the possibility to enter editing commands for editing the image contents by performing gestures on the touch screen, similarly as gestures are used for inputting commands on smartphones. Moreover, once the media sheets have been placed on the print surface, the touch sensitivity may be utilized for indicating and capturing the positions and orientations of the media sheets with high accuracy. Depending upon the type of media sheets and the sensitivity of the touch screen, it may be possible to directly detect those areas on the print surface that are covered by a media sheet and to distinguish them from other areas that are not covered by media sheets, so that the entire outlines of all media sheets can be detected. As an alternative, the outlines or at least selected points on the edge of the media sheets may be indicated by means of a pointing tool, which is pointed on these specified points or is drawn along the edges of the media sheets.

If the exact positions and orientations of the media sheets are indicated in this way via the touch screen, the image contents may again be modified by shifting and rotating the images until a perfect fit with the outline of the media sheets is achieved.

Embodiment examples of the invention will now be described in conjunction with the drawings, wherein:
- Fig. 1: is a schematic view of a flatbed printer according to the invention;
- Fig. 2: is an enlarged schematic view of a display formed on a print surface of the printer shown in Fig. 1;
- Fig. 3: shows an example of a preview image displayed on the print surface;
- Fig. 4: shows the print surface with parts of the image displayed thereon along with media sheets placed on the print surface;
- Fig. 5: shows the print surface and the media sheets with image contents printed thereon;
- Fig. 6: shows the print surface with an image displayed thereon along with media sheets placed on the print surface in accordance with a method according to a second embodiment of the invention;
- Fig. 7: shows the media sheets with images printed thereon in accordance with the second embodiment;
- Fig. 8: illustrates a method of indicating positions and orientations of the media sheets on the print surface;
- Fig. 9: shows an image showing parts of outlines of the media sheets as captured by means of the method shown in Fig. 8;
- Figs. 10 and 11: illustrate an alternative method for indicating a position and orientation of a media sheet on a touch-sensitive print surface;
- Figs. 12 and 13: are enlarged views of tiles of a display on the print surface; and
- Figs. 14 and 15: are flow diagrams showing essential steps of two embodiments of the method according to the invention.

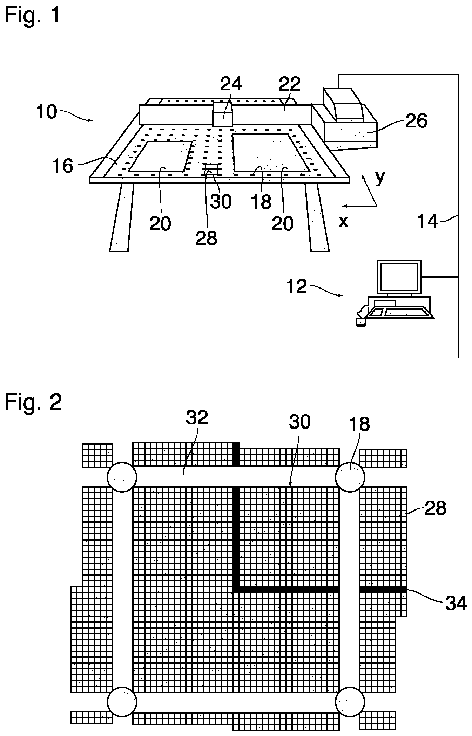

Fig. 1 shows a flatbed printer 10 and a workstation 12 connected to the printer via a network 14 and permitting to compile and edit print jobs to be executed with the printer 10.

The printer 10 has a flatbed with a rectangular print surface 16 in which a regular pattern of suction holes 18 has been formed. The suction holes are connected to a vacuum source, so that media sheets 20, e.g. rectangular sheets of paper, can be sucked against the support surface so as to be immobilized on the flatbed.

A gantry 22 extends across the print surface 16 in a main scanning direction x and is itself movable relative to the support surface in a sub-scanning direction y. A print head assembly 24, comprising for example one or more ink jet print heads, is driven for reciprocating movement along the gantry 22 in the main scanning direction x and is controlled to eject ink, e.g. UV-curable ink, onto the media sheets 20.

The movements of the gantry 22 and of the print head assembly 24 and the ejection of ink by the print heads are controlled by a print controller 26.

The print surface 16 is constituted by an electronic display panel having an array of pixel-sized active display elements 28 that are controllable by the print controller 26 so as to display an image directly on the print surface.

In the present example, since the print surface 16 is perforated by the suction holes 18, the display panel is composed of a number of rectangular tiles 30 that fit between the suction holes 18, as has been shown in greater detail in Fig. 2. More precisely, Fig. 2 shows one complete square tile 30 as well as the edges of adjacent tiles. The tiles are separated from one another by gaps 32 that extend along the rows and columns in which the suction holes 18 are arranged. Thus, the pixel-sized display elements 28 can be controlled to display an image 34 that extends over a plurality of tiles 30 but is interrupted in the gaps 32. The individual tiles 30 may for example be constituted by display panels similar to the known display panels of smartphones and the like.

Another example of a display panel, e.g. a touch-sensitive liquid crystal or LED display, with holes perforating the display area of the panel, has been described in US 2013094126 A1. A display panel of this type may also be used as the print surface 16 in the present invention.

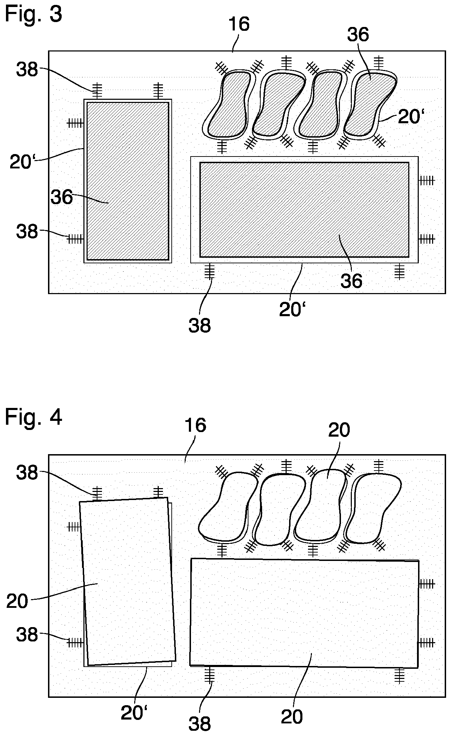

A first example of a method according to the invention for preparing a print job to be executed on the printer 10 shown in Fig. 1 will now be described in conjunction with Figs. 3 to 5.

Fig. 3 is a view of the print surface 16 with a preview image displayed thereon. The image comprises three different types of information, namely outlines 20' of media sheets to be placed on the print surface, image contents 36 (symbolized by hatched areas) to be printed on the media sheets, and positioning marks 38 which define target positions for the media sheets.

In the example shown, the media sheets 20 and, accordingly, their outlines 20' have different sizes and shapes that are specified in the job specifications of the print job. The media sheets may not only be rectangular sheets but may also comprise sheets with irregular shapes. The target positions indicated by the outlines 20' and the positioning marks 38 may be calculated for example by a nesting algorithm in the print controller, the nesting algorithm aiming at optimizing the arrangement of media sheets on the print surface 16 so that a maximum number of media sheets fit into the area of the print surface 16 and can be printed in a single print operation. The positioning marks 38 are also calculated by the print controller. The position of each media sheet is defined by at least three position marks 38 which each designate a position on the print surface that will be located on the edge of the media sheet when the media sheet has been placed on the print surface in exactly the correct position. The positioning marks 38 are accordingly located on the edges of the outlines 20 but are displayed only in areas outside of these outlines so as to remain visible even after the media sheets have been placed.

The image contents 36 displayed on the print surface 16 constitute a preview image that gives an impression how the printed images will appear on the media sheets. In the present example, where the print surface displays also the outlines 20' of the media sheets, it is possible to check whether the image contents 36 are aligned with the outlines 20' as desired, so that, in the actual print process, the image contents will be printed in correct positions and orientations on each media sheet. The image information defining the image contents 36 is derived from print data contained in the print job, typically by means of raster image processing.

In the stage of the print job preparation process illustrated in Fig. 3, the image contents 36 may still be edited by a user or operator. For example, the image contents for a given media sheet may be scaled, shifted and/or rotated in order to improve the fit of the image contents 36 in the outlines 20'. In order to input editing instructions, the user may for example utilize the workstation 12 (Fig. 1), where a reduced image of the print surface 16 with the preview image is displayed on a monitor screen. The user may then select one of the media sheets by activating the corresponding outline and may then input commands for scaling, rotating etc. the associated image contents.

Optionally, the user may also change the scheduled positions for the media sheets 20 by moving the outlines 20' (with the positioning marks 38 attached thereto).

If the display panel constituting the print surface 16 is configured as a touch-sensitive display, the editing operations can be performed directly by pressing with a finger on the print surface 16 and making gestures with one or more fingers for scaling and rotation commands, as is well known for operating systems for smartphones.

Once the user is satisfied with the preview of the image contents 36, she or he may save the corresponding settings and then place the media sheets 20 on the print surface, as has been shown in Fig. 4. The image contents 36 will then be obscured by the media sheets 20, but the positioning marks 38 remain visible. If a sheet has not been positioned correctly, at least parts of the outline 20' of that sheet will also be visible. In that case, the user may correct the positions and orientations of the media sheets 20 in order to align the edges with the positioning marks 38.

The media sheets 20 will be held in position due to the suction pressure created in the suction holes 18 (which have not been shown in Figs. 3 and 4 for reasons is simplicity).

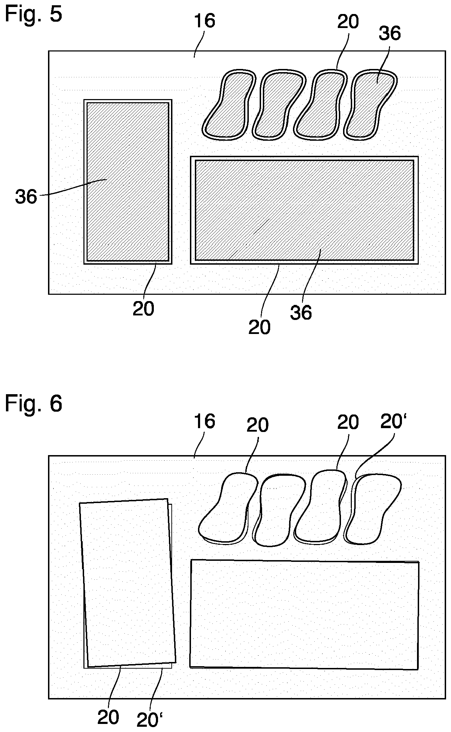

When all media sheets have been positioned correctly, the process of preparing the print job is completed, and the printer 10 will be activated so as to scan the print surface with the print head assembly 24, so that the image contents are printed on the media sheets in the intended positions, as has been shown in Fig. 5. The display function of the print surface 16 has been disabled so that the positioning marks 38 are no longer visible in Fig. 5.

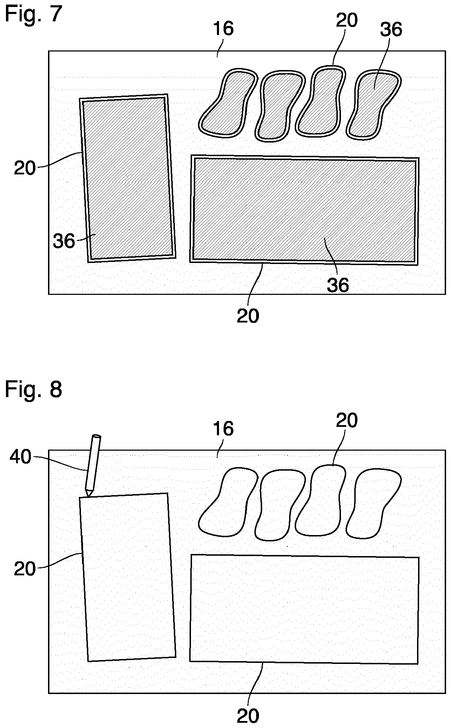

Another example of a method according to the invention will now be described in conjunction with Figs. 6 and 7.

A first step of the method, wherein the image contents may be edited, is the same as in Fig. 3, with the only difference that no positioning marks 38 are shown on the print surface.

In this embodiment, it is assumed that the print surface is constituted by a touch-sensitive screen, and the sensitivity of the touch sensors is high enough and/or the weight per area of the media sheets 20 is large enough for the touch sensors to be activated, so that the outlines of the media sheets 20 can be read directly from the touch-sensitive panel. Fig. 6 shows, in bold lines, the media sheets 20 in the positions in which they have been placed on the print surface 16. Further, the outlines 20' indicating the target positions of the media sheets have been shown in faint lines, partly obscured by the media sheets. It can be seen that, in this example, the media sheets have been positioned on the print surface 16 with only poor accuracy, so that the edges of the media sheets deviate from the target outlines 20'. However, since the touch-sensitive panel is capable of detecting the actual positions and postures of the media sheets 20, it is not necessary to correct the positions of the sheets. Instead, the print controller 26 can automatically edit the image contents to be printed on each media sheet so as to correct the positional deviation of the media sheets from the target outlines.

Consequently, during and after printing, as is shown in Fig. 7, the media sheets 20 still have the same positions as in Fig. 6, but the image contents 36 have been printed in shifted and/or rotated positions so as to neatly fit into the contours of the media sheets.

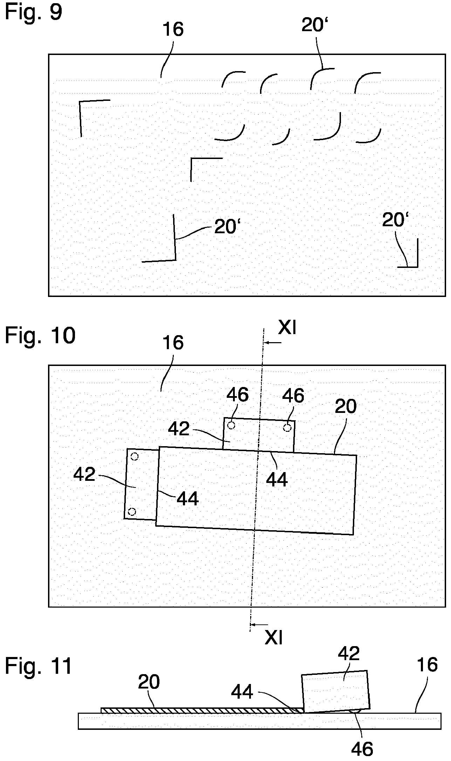

Figs. 8 and 9 illustrate a modification of the method described above, which may be applied in a case where the sensitivity of the touch-sensitive screen is not high enough to detect the positions of the media sheets solely on the basis of the weight of the media sheets. In that case, as is shown in Fig. 8, a pencil-like tool 40 may be used for inputting the contours of the media sheets 20. The media sheet for which the contour is to be drawn is immobilized on the print surface 16 by the action of the suction holes 18 and may additionally be fixed by manually pressing the media sheet against the print surface. The tip of the tool 40 is dragged along at least a portion of the edges of the media sheet 20 while being pressed against the touch-sensitive print surface 16, so that the designated portions of the contour can be recorded. The result is shown in Fig. 9, wherein, for each of the media sheets, certain parts of the outlines 20' have been recorded by means of the tool 40. The lengths and positions of the recorded parts of the outlines 20' have been selected such that they uniquely define the positions and postures of the media sheets, so that the printed images can be aligned with the sheets in the same way as in Fig. 7.

Figs. 10 and 11 illustrate another possible modification of this method, which is particularly suited for cases in which the media sheets 20 have a rectangular shape, as shown in Fig. 10. Fig. 11 is a sectional view with the section taken along the line XI - XI in Fig. 10. The media sheet is aligned at stop members 42 that have been placed manually on the print surface 16 and have a weight high enough to actuate the touch sensors in the print surface. In the example shown, the stop members 42 take the form of rulers each having a straight edge 44 which can be brought into engagement with an edge of the media sheet 20. On the bottom side, each stop member 42 has two bosses 46 with which the stop member is supported on the print surface 16, as shown in Fig. 11. The bosses 46 make a detectable impression on the touch screen and also hold the stop member 42 in an inclined position in which its straight edge 44 is in line-contact with the print surface 16 and also makes a detectable impression on the print surface. This permits to detect the positions and postures of the stop members 42 and, thereby, the position and posture of the media sheet 20 with high accuracy.

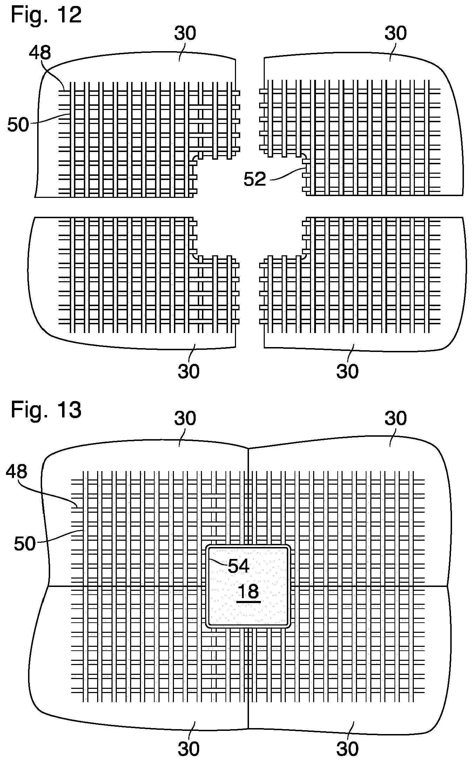

Another possible embodiment of the display on the print surface 16 will now be described in conjunction with Figs. 12 and 13. In the embodiment of the print surface 16 that has been shown in Fig. 2, the gaps 32 between the tiles 30 have the effect that the image 34 displayed on the print surface is incomplete and has certain voids at the positions of the gaps 32. Figs. 12 and 13 illustrate an embodiment in which the touch screen tiles 30 can be butted against one another so as to fill the entire area of the print surface 16 with only the exception of the suction holes 18.

Fig. 12 is an exploded view of corner portions of four of such tiles 30. As is well known in the art, the pixel-sized display elements 28 and also the touch sensor elements are arranged in matrix fashion on the surface of the panel and are electrically contacted by a grid of electrically conductive leads 48 and 50 which extend along the rows and columns of the display elements. The leads 48 and 50 are extended to the respective edges of the tile, where they can be electrically connected to a screen driver in the print controller 26. The individual display elements 28 can be addressed by applying a voltage to the two leads 48 and 50 that intersect at the position of the display element. Similarly, signals from the touch sensor elements can be led out via the leads that intersect at the position of the touch sensor element.

A problem with conventional touch screens is that the holes that need to be formed in the panel in order to form the suction holes 18 would severe some of the leads 48 and 50, so that it would not be possible to contact and address all of the display and touch sensor elements.

In the example shown in Figs. 12 and 13, the tiles 30 have rectangular cut-outs 52 at each of their four corners, so that, when the tiles are butted together as in Fig. 13, the cut-outs 52 constitute a suction hole 18 with an approximately square shape.

In the condition shown in Fig. 12, the leads 48 and 50 are extended beyond the respective edges of the tile and also beyond the edges of the cut-outs 52. The projecting ends of the leads can be folded over. Then, when the tiles are put together as in Fig. 13, the leads ending at the tile edges can be brought into contact with one another so as to form continuous leads. The leads that terminate at the edges of the cut-outs 52 are also folded over, so that they can be contacted from below. In Fig. 13, the folded ends of these leads are protected by a frame-like insert 54 that has been inserted into the void formed by the four cut-outs 52 of the tiles and surrounds the proper suction hole 18. In this way, all the leads 48 and 50 of the tiles can be contacted so as to properly address all the display elements and touch sensor elements on the entire print surface.

Depending upon the type of media sheets being processed, it may also be possible to have a print surface with no suction holes at all, so that a continuous display may be used. Thus the method according to the invention can be practiced with a variety of flatbed printers with different designs.

The essential features of the method according to the invention will be summarized below.

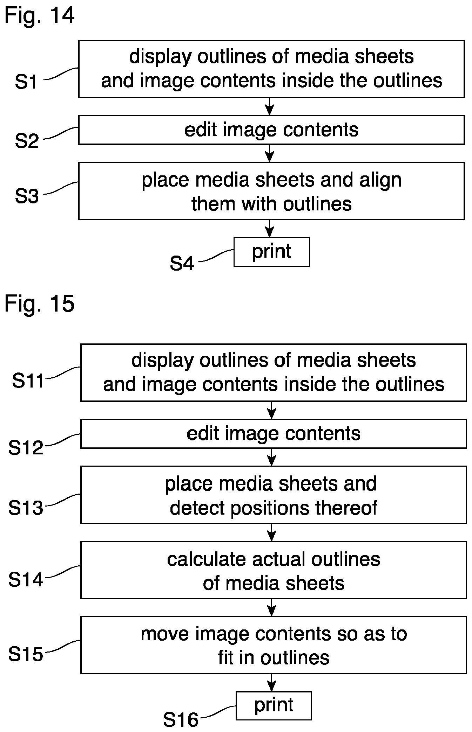

The main steps of a method of the type illustrated in Figs. 3 to 5 have been shown in a flow diagram in Fig. 14.

In step S1, the positioning marks 38 for the media sheets 20 are displayed on the print surface 16 so as to indicate proposed target positions for the media sheets 20. In addition, the outlines 20' of the media sheets may also be displayed. Further, the image contents 36 to be printed on each media sheet are displayed in the respective outlines 20'.

Then, in step S2, the image contents 36 may be edited, if necessary.

In step S3, the media sheets 20 are placed on the print surface 16 so as to be aligned with the outlines 20' and/or the positioning marks 38, which are still visible even when the image contents 36 are obscured by the media sheets.

When the sheets have been positioned correctly, the print process can be started in step S4.

Fig. 15 illustrates essential steps of an embodiment of the method that can be used when the print surface 16 is configured as a touch-sensitive screen.

The first two steps S11 and S12 of this method are equivalent to the steps S1 and S2 described above.

Then, in step S13, the media sheets 20 are placed on the print surface and roughly aligned with the outlines 20' of the media sheets, and the touch-sensing function of the print surface 16 is used for detecting the actual positions of the media sheets.

On the basis of the detection results, the actual outlines of the media sheets 20 are calculated in step S14.

Then, in step S15, a fitting algorithm checks whether the image contents fit neatly into the calculated outlines, and, if not, corrections are made by appropriately moving the image contents relative to the outlines of the respective media sheets. Finally, the print process may be started automatically in step S16.

## Claims

1. A method of preparing a print job for a flatbed printer (10), the method comprising the steps of:
- displaying, on the print surface (16), a preview image of image contents (36) to be printed on the media sheets (20);
- placing a number of media sheets (20) on a print surface (16) of the flatbed printer (10);
and at least one of:
- editing the image contents (36); and
- repositioning one or more of the media sheets (20),
**characterized in that** the preview image is formed on the print surface (16) by controlling a raster of active display elements (28) that are provided on the print surface (16).

2. The method according to claim 1, wherein the preview image of the image contents (36) is displayed together with outlines (20') of the media sheets (20) to be placed on the print surface (16).

3. The method according to claim 1 or 2, wherein positioning marks (38) are displayed on the print surface (16) for indicating target positions for the media sheets (20).

4. The method according to any of the preceding claims, wherein a touch-sensitive screen is used as the print surface (16), and position information on the media sheets (20) placed on the print surface is input via the touch-sensitive screen.

5. The method according to any of the preceding claims, wherein a touch-sensitive screen is used as the print surface (16), and editing commands are input via the touch-sensitive screen.

6. A flatbed printer (10) having a print surface (16), **characterized in that** the print surface (16) is constituted by a display having a raster of active display elements (28).

7. The printer according to claim 6, wherein the print surface (16) is configured as a touch-sensitive screen.

8. The printer according to claim 6 or 7, wherein suction holes (18) are distributed over the print surface (16) for attracting and fixing the media sheets on the print surface.

9. The printer according to claim 8, wherein the display forming the print surface (16) is composed of a plurality of tiles (30) that are separated by gaps (32), the suction holes (18) being provided in the gaps (32).

10. The printer according to claim 8, wherein the display elements (22) occupy the entire area of the print surface (16), with the exception of only those areas formed by the suction holes (18).
